(19) Europäisches Patentamt
European Patent Office
Office européen des brevets

(11) **EP 4 567 742 A1**

(12) **EUROPEAN PATENT APPLICATION**

(43) Date of publication:
**11.06.2025 Bulletin 2025/24**

(21) Application number: **24212178.8**

(22) Date of filing: **11.11.2024**

(51) International Patent Classification (IPC):
**G06V 10/24** (2022.01)    **G06V 10/44** (2022.01)
**G06T 7/70** (2017.01)

(52) Cooperative Patent Classification (CPC):
**G06V 10/245; G06T 7/70; G06V 10/248;
G06V 10/44;** G06T 2207/30164; G06V 2201/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.12.2023 GB 202318751**

(71) Applicant: **Rolls-Royce plc
London N1 9FX (GB)**

(72) Inventors:
• **Nasser, Bilal**
  **Derby, DE24 8BJ (GB)**
• **Pulisciano, Adriano**
  **Derby, DE24 8BJ (GB)**
• **Flint, Paul**
  **Derby, DE24 8BJ (GB)**
• **Wedekind, Jan**
  **Derby, DE24 8BJ (GB)**
• **Shaukat, Affan**
  **Derby, DE24 8BJ (GB)**

(74) Representative: **Rolls-Royce plc
Moor Lane (ML-9)
PO Box 31
Derby DE24 8BJ (GB)**

(54) **BLADE MONITORING**

(57)    Computer-implemented methods and apparatuses for blade monitoring are described. An example method comprises obtaining an image of at least a part of a blade and analysing the obtained image to detect portions of the image showing a part of a blade. The example method further comprises determining, using information on the detected portions of the image, the position of the blade relative to a imaging device used to obtain the image of at least a part of the blade, and comparing the determined position with a reference position. The example method also comprises determining a positional suitability of the imaging device position, based on the comparison, and outputting positional suitability information.

Obtain image of at least part of blade — S502

Analyse image, detect portions showing part of blade — S504

Determine position of blade relative to imaging device — S506

Compare determined position with reference position — S508

Determine imaging device positional suitability — S510

Output positional suitability information — S512

*FIG. 5*

EP 4 567 742 A1

## Description

TECHNICAL FIELD

The present disclosure relates to methods and apparatuses for monitoring blades, in particular for capturing suitable image data for analysing turbine blade wear.

BACKGROUND

Aircraft engines and other components commonly comprise turbines, which typically include a plurality of turbine blades. In some designs, the tips of turbine blades comprise shrouds, which control airflow leakages and/or reduce vibrations. It is possible for turbine blade shrouds to become damaged in use, which may in turn impact the efficiency, performance and in some cases safety of the shroud, blade and/or engine.

In some examples, an inspection may be carried out in relation to a physical (e.g. mechanical) component, such as an aircraft engine. During operation the one or more engines of an aircraft may become damaged, for example due to relatively high operating temperatures, foreign object damage, corrosion and so on. Aircraft engines are typically inspected at regular intervals by a human inspector to determine the condition of components within the engine. Where components are found to be at or approaching an unacceptable condition, the engine may be removed from the aircraft for repair. The quality and duration of the inspection is highly dependent upon the skill and experience of the human operator (for example, parts inspector). Further, during the inspection period, the aircraft is necessarily grounded and therefore not available for operation by, for example, an airline.

BRIEF SUMMARY

An embodiment provides a computer implemented blade monitoring method. The method comprises obtaining an image of at least a part of a blade and analysing the obtained image to detect portions of the image showing a part of a blade. The method further comprises determining, using information on the detected portions of the image, the position of the blade relative to a imaging device used to obtain the image of at least a part of the blade, and comparing the determined position with a reference position. The method also comprises determining a positional suitability of the imaging device position, based on the comparison, and outputting positional suitability information.

Obtaining the image may comprise receiving the image from the imaging device. The method may further comprise capturing the image using the imaging device.

In some embodiments, obtaining the image comprises obtaining a plurality of images. Where plural images are obtained, analysing the obtained image and determining the position of the blade may be repeated for more than one of the plurality of obtained images. Also, the determined position of the blade in the more than one images may be used to select an image for use in the position comparison and positional suitability determination. The comparison between the determined position of the blade relative to the imaging device with the reference position in the more than one images may also or alternatively be used to select an image for use in the position comparison and positional suitability determination.

In some embodiments, the portions of the images are pixels; where this is the case, the detection of the pixels showing part of a blade may use edge detection. Minimum area suppression may also be used to filter out short edges. The minimum area suppression may be used to filter out short edges subsequent to the edge detection.

A distance transform operator may be applied to the detected edges, and a lookup table may be used to determine the relative separation of each edge pixel and the imaging device when determining the position of the blade relative to the imaging device.

Comparing the determined position with the reference position may comprise calculating an average distance for the edge pixels in the image and comparing the calculated average distance with a reference average distance obtained from a reference image, and the positional suitability of the imaging device position may be determined based on the similarity of the calculated average distance and reference average distance.

In some embodiments, outputting the positional suitability information may comprise outputting a numerical score for the imaging device position based on similarity to the reference position. The numerical score may be a percentage similarity score. In particular, the numerical score may be output to a Graphical User Interface (GUI) used by an operator in the positioning of the imaging device. Outputting positional suitability information may comprise outputting instructions for repositioning. The instructions for repositioning may include at least one of a rotational movement relative to the blade and translational movement relative to the blade, to be applied to the imaging device. Also, the outputting of the positional suitability information may comprise outputting the obtained image to a display, wherein the display also comprises an indicator of the reference position.

In some embodiments, the blade is a turbine blade, the part of a blade is a part of the shroud of the blade, and/or the imaging device is a borescope imaging device.

Comparing the determined position of the blade relative to the imaging device with the reference position may comprise determining the orientation of the blade relative to the imaging device.

The positional suitability of the imaging device may be determined using the orientation of the blade relative to the imaging device, and wherein a position of the blade that is parallel to the horizon of the imaging device image may be favoured in the position suitability determination.

A further embodiment provides an apparatus comprising processor circuitry. The processor circuitry is configured to obtain an image of at least a part of a blade, and analyse the obtained image to detect portions of the image showing a part of a blade. The processor circuitry is further configured to determine, using information on the detected portions of the image, the position of the blade relative to an imaging device used to obtain the image of at least a part of the blade. The processor is also configured to compare the determined position of the blade relative to the imaging device with a reference position, and determine a positional suitability of the imaging device position, based on the comparison. The processor is also configured to output the positional suitability information.

The apparatus may further comprise the imaging device configured to capture the image of at least part of the blade.

The apparatus may further comprise a display unit configured to display a Graphical User Interface, GUI, comprising a numerical score for the imaging device position based on similarity to the reference position.

According to another aspect there is provided a machine readable medium storing instructions which, when executed by a processor, cause the processor to carry out the method as described in the preceding paragraphs.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

BRIEF DESCRIPTION OF DRAWINGS

Embodiments will now be described by way of example only, with reference to the Figures, in which:

Fig. 1 illustrates a schematic diagram of an apparatus for inspection of a component according to various embodiments;
Fig. 2 illustrates an engine comprising turbines which may be inspected according to various embodiments;
Fig. 3 is a schematic illustration of part of a turbine according to some embodiments;
Fig. 4 is a schematic illustration of two adjacent shrouds of a turbine which form a shroud gap according to some embodiments;
Fig. 5 is a flow diagram illustrating a computer-implemented turbine blade monitoring method according to some embodiments;
Fig. 6A & 6B are simplified images showing an example GUI in accordance with some embodiments;
Fig. 7 is a schematic diagram of a machine-readable medium in communication with a processor according to some embodiments.

DETAILED DESCRIPTION

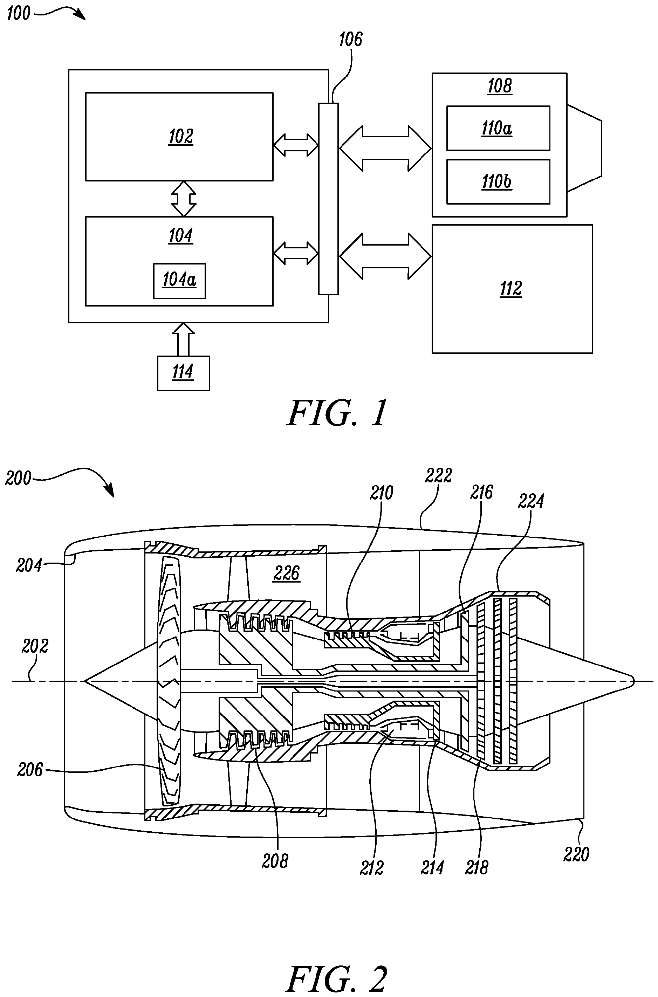

**Fig. 1** shows an example of an apparatus 100 which may be used for inspecting a component. The apparatus 100 comprises processor circuitry 102, a machine-readable memory 104 and an interface 106. In use of the apparatus 100, the apparatus 100 may receive data (wirelessly or using a wired connection) via the interface 106, in this example from an imaging device 108. In some embodiments an imaging device 108 used to capture image data may form part of the apparatus 100. Moreover, the apparatus may output data (wirelessly or using a wired connection) via the interface 106 to an output device 112, which may for example comprise any or any combination of a display screen, an audio output, a printer and so on. The interface 106 may for example comprise interface circuitry (such as a Universal Serial Bus (USB) plugs and sockets) and/or transceiver circuitry.

In some examples, the apparatus 100 may comprise additional components, such as a user input device 114 enabling a user to at least partially control the apparatus 100 (for example, any or any combination of a keyboard, a keypad, a touchpad, a touchscreen display, a computer mouse and so on).

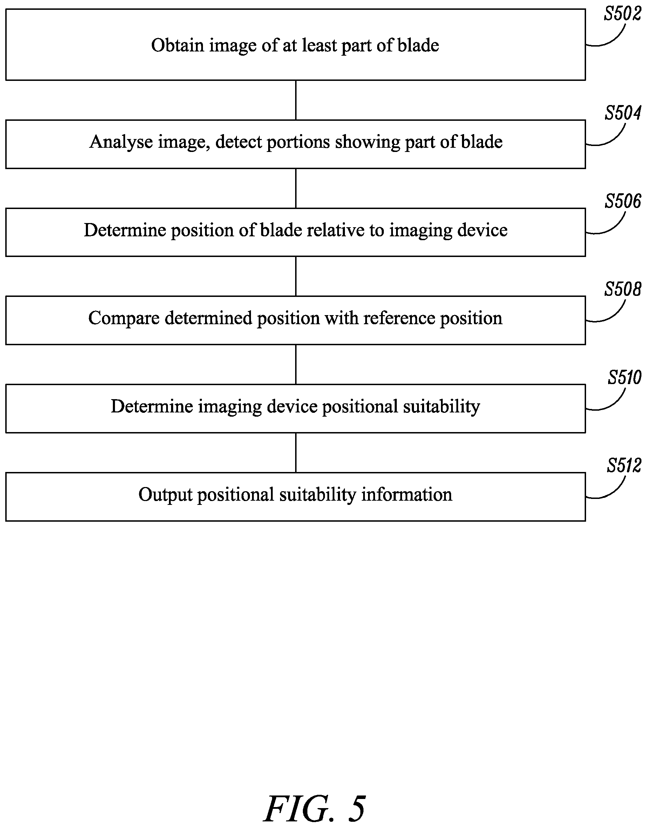

The apparatus 100 may comprise a standard computer, configured with software held or accessible to a memory thereof, or a special purpose computer configured with hardware or firmware to carry out the methods described herein. The processor circuitry 102 may comprise any suitable circuitry to carry out, at least in part, the methods described herein and as illustrated in Fig. 5. For example, the processor circuitry 102 may comprise any or any combination of: at least one application specific integrated circuit (ASIC), at least one field programmable gate array (FPGA), single or multi-processor architectures, sequential/parallel architectures; at least one programmable logic controller (PLC); at least one microprocessor; at least one microcontroller, a central processing unit (CPU), a graphics processing unit (GPU), or the like. The processor circuitry 102 may comprise one or more processors.

The memory 104 is a machine-readable medium and is configured to store computer readable instructions 104a that, when read by the processor circuitry 102 causes the processor circuitry to carry out the methods described herein, and as illustrated in Fig. 5. The computer readable instructions may be software or firmware, or may be a combination of software and firmware. The memory 104 may be any suitable transitory and/or non-transitory computer readable storage medium, data storage device or devices. For example, the memory 104 may comprise a hard disk and/or solid-state memory (such as flash memory). The memory 104 may be permanent non-removable memory or may be removable memory. The memory may include any or any combination of local memory employed during actual execution of the computer readable instructions, bulk storage and cache memories which provide temporary storage of at least some computer readable instructions. The memory 104 may comprise any or any combination of a USB flash drive, an external hard disk drive, an external solid-state drive, a secure digital (SD) card, an optical disc (such as a compact disc (CD), a digital versatile disc (DVD) or a Blu-ray disc), or the like.

While the apparatus 100 is shown as a single device, components thereof may be distributed between a plurality of devices and locations.

The imaging apparatus 108 in the example shown in Fig. 1 is provided separately from the apparatus 100; as mentioned above in some embodiments the imaging apparatus 108 may be part of the apparatus 100. The imaging apparatus 108 may comprise a borescope. Such apparatus may comprise a flexible tube (which may be referred to as a snake arm), where an imaging sensor is mounted at one end of the flexible tube, and a display 112 is mounted at the opposite end of the flexible tube. In some examples, the imaging apparatus 108 may be embedded within a component (e.g. engine or turbine) which is to be imaged. In some examples, the imaging apparatus 108 may be provided on a moveable platform and the position and/or pose thereof may be controlled. In some examples, the processor circuitry 102 may control the operation of the imaging apparatus 108. In other examples, the imaging apparatus 108 may be controlled by a controller thereof, which may comprise processor circuitry.

In the example shown in Fig. 1, the imaging apparatus 108 comprises a 2D imaging apparatus 110a and a 3D imaging apparatus 11 0b, in some embodiments the 2D and 3D imaging apparatuses may not both be provided, and/or may be provided separately from one another.

In some embodiments as discussed herein, the imaging apparatus 108 may be controlled to provide 2D data of at least part of a turbine or engine under inspection. In particular, the imaging apparatus may obtain at least one image showing at least a part of a blade (such as a front or rear side of a blade, or of the shroud of a blade). The 2D imaging apparatus 110a may therefore comprise a camera (for example, a charge-coupled device (CCD) or a complementary metal-oxide-semiconductor (CMOS)) or the like.

Moreover, in some embodiments as discussed herein, the imaging apparatus 108 may additionally or alternatively be controlled to provide three-dimensional (3D) data of at least part of a turbine under inspection. The 3D imaging apparatus 110b may comprise a structured-light 3D scanner, stereo cameras or any other suitable apparatus. Consequently, in some embodiments, the imaging apparatus 108 may comprise a structured-light 3D scanner for generating 3D data, and a camera for generating 2D data.

The 2D data, and/or the 3D data may for example be passed to the apparatus 104 for processing, as further described below.

**Fig. 2** is an example of an engine 200 comprising compressors and turbines which may be inspected using the apparatus 100. The engine 200 may be associated with an aircraft (e.g. mounted thereon, or configured to be mounted thereon) and configured to generate propulsive thrust and/or electrical energy for the aircraft. In this example, the engine 200 is a gas turbine engine. However, in other examples, the engine 200 may be another type of engine.

In this example, the engine 200 has a principal rotational axis 202. The engine 200 comprises, in axial flow series, an air intake 204, a propulsive fan 206, an intermediate pressure compressor 208, a high-pressure compressor 210, combustion equipment 212, a high-pressure turbine 214, an intermediate pressure turbine 216, a low-pressure turbine 218 and an exhaust nozzle 220. A nacelle 222 generally surrounds the engine 200 and defines both the intake 204 and the exhaust nozzle 220. An internal support structure 224 surrounds the fan 206, compressors 207, 210, combustion equipment 212, and turbines 214, 216, 218.

Briefly, the engine 200 operates as follows: air entering the intake 204 is accelerated by the fan 206 to produce two air flows: a first air flow which passes into the intermediate pressure compressor 208 and a second air flow which passes through a bypass duct 226 to provide propulsive thrust. The intermediate pressure compressor 208 compresses the air flow directed into it before delivering that air to the high-pressure compressor 210 where further compression takes place.

The compressed air exhausted from the high-pressure compressor 210 is directed into the combustion equipment 212 where it is mixed with fuel and the mixture combusted. The resultant hot combustion products then expand through, and thereby drive the high, intermediate and low-pressure turbines 214, 216, 218 before being exhausted through the nozzle 220 to provide additional propulsive thrust. The high 214, intermediate 216 and low 218 pressure turbines drive respectively the high-pressure compressor 210, intermediate pressure compressor 208 and fan 206, each by suitable interconnecting shaft.

Each of the fan 206, the compressors 208, 210, and the turbines 214, 216, 218 comprise a plurality of rotating blades, which are nominally the same. While an inspection may be carried out in relation to any part of the engine 200, detailed inspections of the blades of the fan 206, the compressors 208, 210, and the turbines 214, 216, 218 may in particular be carried out periodically.

It will be appreciated that the engine 200 illustrated in Fig. 2 is by way of example only, and various alternatives are within the scope of the present disclosure. In some embodiments discussed herein, the turbine undergoing inspection comprises turbine blades having shrouds. Moreover, in some examples, the turbine undergoing inspection herein comprises a turbine with a repeating structure, i.e. a plurality of turbine blades which are similar, or nominally the same, as one another. Turbine blades within a turbine, such as the turbines 214, 216, 218 may be nominally the same as one another, at least in part. Some embodiments of the methods set out herein may utilise the fact that the parts are similar to one another, or to a nominal model to analyse or measure features thereof in an efficient manner.

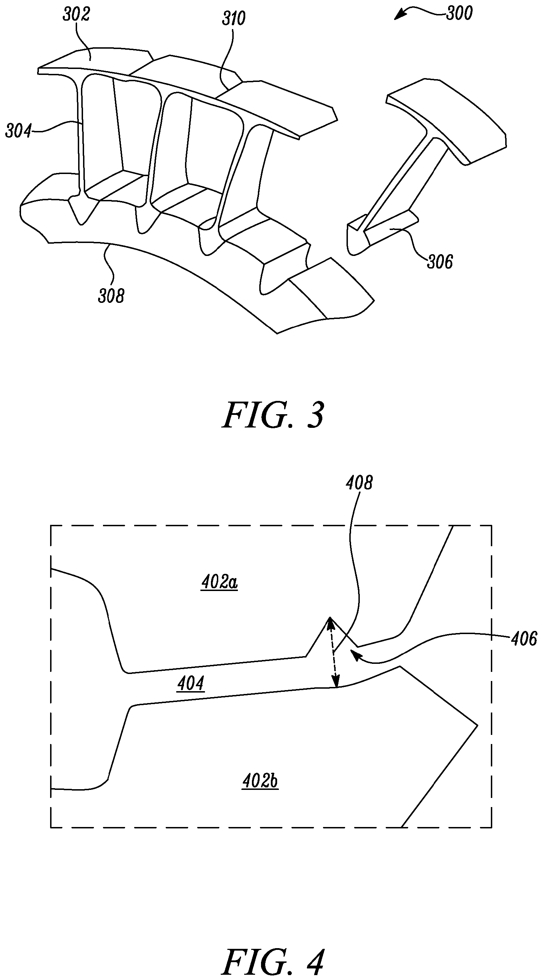

Fig. 3 is a schematic illustration of part of a turbine 300 according to some embodiments. The turbine 300 is an example of a turbine that may be inspected according to some of the methods set out herein.

The part of the turbine 300 that is shown in Fig. 3 is partially assembled and comprises four turbine blades. Each turbine blade comprises a shroud 302, an aerofoil 304, a root 306 and is mounted to, or mountable on, a platform 308. The root 304 of the aerofoil 304 secures the aerofoil 304 to the platform 308. Between any two adjacent shrouds 302 is a shroud gap 310. Embodiments may be used in particular for inspections of the shrouds 302 of turbine blades, and/or of other parts of turbine blades such as front or rear surfaces of turbine blades.

When placed in situ within an engine, the turbine 300 is surrounded by the internal support structure 224, which is lined with a liner. Typically, the surface of the liner is formed from abraded metal.

Fig. 4 is a schematic illustration of two adjacent shrouds 402a, 402b of a turbine which form a shroud gap 404. The illustration is an example of an image frame which may be captured by an image processing device (by way of example, a camera) and may be used to perform the methods set out here in some embodiments. During use, defects may develop in the shrouds 402a, 402b which alter the shroud gap 404. The defects may result from erosion of the shroud material, for example. Fig. 4 depicts a hole 406 that passes through one of the shrouds 402a completely. Such a hole 406 in a shroud 402a is referred to herein as shroud holing. It can be seen in Fig. 4 that the shroud holing results in an increase in width of the shroud gap 404 at the position of the shroud holing, providing a maximum shroud gap dimension indicated at 408.

As noted above, the turbine may be inspected in situ and therefore images of shroud gaps may be captured against a backdrop which includes the liner of the internal support structure.

Measurements of variation in turbine properties, such as shroud holing and other shroud defects, may provide an indication of the wear experienced by a turbine and can therefore be used to determine whether all or part of the turbine requires servicing, maintenance and/or replacement. For example, a criterion may be placed on the total cumulative shroud holing area for a turbine. In some examples, if the total cumulative shroud holing area for a turbine blade exceeds a threshold value, e.g., x mm$^2$, then it may be determined that the turbine should be removed for servicing. Alternatively or additionally, a criterion may be placed on a maximum size of a single hole, a maximum holing area for all of the turbine blade shrouds, and so on.

Alternatively or additionally, a criterion may be placed on the widest shroud gap of a turbine, marked as 408 in the example of Fig. 4. While this coincides with the position of the hole 406 in the illustrated example, this may not be the case in all examples. For example, if the widest shroud gap of a turbine exceeds a threshold value, e.g., y mm, then it may be determined that the turbine should be removed for servicing.

In some embodiments, the criteria for servicing, maintenance and/or replacement of the turbine may be any or any combination of multiple properties of the turbine, for example one or more of: total shroud holing area, maximum shroud gap, number of shroud holes, number of flight cycles, number of flight hours, and so on. In some embodiments, the threshold used for a total shroud holing area criterion and/or maximum shroud gap criterion may vary depending on the number of flight cycles and/or the number of flight hours in which the turbine has been used. By way of example, a higher threshold total shroud holing area criterion may be implemented if the number of flight cycles is low and/or the number of flight hours is low. In order to allow accurate and efficient monitoring of turbine (for example, turbine blade shroud) properties, it is necessary to capture suitable image data to allow the properties to be determined.

Fig. 5 is a flow diagram illustrating a computer-implemented blade monitoring method according to some embodiments. The method may be performed on the turbine 300 as illustrated in Fig. 3, and/or any one of turbine 214, 216 and 218 illustrated in Fig. 2, or any other suitable turbine/engine. The monitoring method illustrated by Fig. 5 may be used to monitor one or more properties associated with the turbine, such as turbine blade shroud and shroud gap properties. It should be appreciated that the method may be performed on one or more of the intermediate-pressure compressor 208 and the high-pressure compressor 210.

As shown in block S502 of Fig. 5, the method comprises obtaining at least one image of at least a part of a turbine blade. Obtaining the images may be performed, for example, by the apparatus 100 under the control of processor 102 following instructions saved on the machine-readable memory 104, all as shown in Figure 1. In some embodiments, the images are obtained from an imaging device, for example, imaging device 108 as shown in Figure 1 (which may be or comprise a borescope), and are obtained via an interface 106. The images may be obtained via a wired or wireless connection to said imaging device (wherein the wired connection may convey electrical signals and/or optical signals, for example). In some embodiments the imaging device may form part of the apparatus performing the method, and the method may also comprise capturing the image(s) using the imaging device. Images may additionally or alternatively be obtained from an imaging device that is separate from the apparatus performing the method.

As mentioned above, the method comprises obtaining at least one image; in most embodiments a plurality of images are obtained. The plurality of images may be obtained as a number of discrete images, for example as a number of digital photographs. Alternatively, the plurality of images may collectively form a video, for example, the plurality of images may be some or all of the frames collectively forming a video recording. In some embodiments, as mentioned above, the imaging device used to capture the images may be a digital camera. Additionally or alternatively, in some embodiments the imaging device used to capture the images may be or may form part of a borescope imaging device.

The at least one obtained image to be used in the method depicts at least a part of a turbine blade. Where a plurality of images are captured (as discussed above), an initial filtering may be performed to discard images that do not show at least a portion of a turbine blade. In some embodiments in which an imaging device captures a large number of images, for example, a large number of frames of video data, a portion of these images may be obtained for subsequent analysis and a further portion may be discarded. By way of example, where video data is captured at a rate of 60 frames per second (fps), alternate frames may be obtained for subsequent analysis or discarded, such that frames are obtained for analysis at a rate of 30 fps. Alternatively, in some embodiments all of the images captured by an imaging device may be obtained for subsequent analysis. Where plural images are captured, analysis and selection of an image to use in the positional suitability determination may further improve the efficiency of the process. In some embodiments, the 3D point data quality for captured images may be analysed by using signal to noise ratio (kernel density filter or others, for example) to verify the noise on the point cloud (where said noise may be caused by slight motion on the probe, high reflectiveness caused by deposits on the surface of the blade, or dirt on the lenses). The 3D point data quality may be checked to verify that there the quality is above a predetermined threshold, that is, there is enough point cloud scan on the blade surface and feature points as this may impact indirect area measurement methods as discussed herein (said methods may be dependent on 3DPM scan information).

The obtained image(s) are then analysed to detect portions of the image(s) showing part of a turbine blade. The obtained image(s) may be divided into portions in any suitable way; typically the images are divided into pixels which can subsequently be analysed. The analysis of the one or more obtained images is shown in block S504 of Fig. 5; typically although not exclusively, where plural images have been obtained, the analysis is repeated for more than one (potentially all) of the obtained images. Analysing the one or more obtained images to detect portions of the image showing a part of a turbine blade may be performed, for example, by the apparatus 100 under the control of processor 102 following instructions saved on the machine-readable memory 104, all as shown in Figure 1.

The portions of the image showing part of a turbine blade may be detected in any suitable way, typically through image analysis. It is commonly the case that the captured images will include portions (for example, pixels) showing a part of a turbine blade and portions showing a part of the engine liner. The turbine blade and engine liner are typically visually distinct from one another, for example, having different colouring, reflectivity, and so on. Accordingly, analysis of the obtained image(s) may allow the portions of the obtained image(s) showing the turbine blade and not showing the turbine blade to be differentiated from one another.

In some embodiments the detection of portions (for example, pixels) showing part of a turbine blade uses edge detection, for example, based on the change in colouring/reflectivity/etc. between adjacent portions that may be indicative of an edge. When implementing edge detection, a similarity check may be performed between a reference image and an obtained image. For example, prominent edges that mark the outline of the turbine blade and liner may be extracted in both images. Image border pixels may be filtered to mitigate the effects of edge boundaries. Detected edges in the obtained image that do not correspond to prominent edges in the reference image may then be identified as erroneously detected edges. Additionally or alternatively, minimum area detection may be used to filter out short edges in some embodiments. Shroud 402a in Fig. 4 illustrates shroud holing 406, as discussed above. As a consequence of this shroud holing, the edge of shroud 402a abutting shroud gap 404 deviates from a typical shape; the edges of the shroud hole 406 may be detected in the edge detection process. The shroud hole edges may not satisfy a minimum area requirement, and may therefore be disregarded if a minimum area detection process is applied. Additionally or alternatively, feature point tracking may be used in which where critical landmark points (for example, edges/corners that affect the damage detection results) can be used to evaluate obtained images; the higher number of critical feature points detected in an obtained image the higher the best-fit score for the measurement and detection algorithm process. Using one or more of the above techniques, the images may be efficiently analysed to determine portions that do, and do not, show part of a turbine blade.

Where a plurality of images are obtained, typically these images are obtained with the turbine in a different orientation in each images. In some embodiments, the plurality of image frames may be a video file of the shroud gaps (between the shrouds of turbine blades, as discussed above) while the turbine is in motion. The turbine may, for example, be driven by hand or using a driving tool while video is recorded. Video recording the turbine in motion accounts for the backlash effect in which the shroud gap is different when the turbine is in motion compared to when the turbine is stationary. Recording a turbine in motion also makes it easier to consistently obtain an image frame for each of the shroud gaps in which the shroud gap is in a desired orientation.

Following the analysis of the one or more images to detect portions of the image showing parts of the turbine blade, the method then continues with determining, using information on the detected portions of the image, the position of the turbine blade (as shown in the image) relative to an imaging device used to obtain the image of at least a part of the turbine blade, as shown in block S506 of Fig. 5. Determining the relative position of the turbine blade may be performed, for example, by the apparatus 100 under the control of processor 102 following instructions saved on the machine-readable memory 104, all as shown in Figure 1. Where plural images have been obtained and analysed, determining the position of the turbine blade may be repeated for more than one of the plurality of obtained images. The results of this determination (the determined position of the turbine blade relative to the imaging device) may be used to select an image for use in the position comparison and positional suitability determination. By way of example, an image for which the determined position is the most similar to a reference position from among the plural images may be selected for use subsequently.

Identifying an image in which the turbine blade position is most similar to a reference position may comprise using algorithms and/or other image processing techniques. For example, this may comprise determining difference values between the reference image and the plurality of images (in this example, frames of a video). In one example, difference data may be determined on a per pixel basis. It may be appreciated that obtained images are likely to be similar to the reference image when a shroud gap is in a relatively similar position to the shroud gap as captured in the reference image. In alternative embodiments, the images to be used in subsequent analysis may be identified by a tag, which may be added by a user following a manual review of image data. In some embodiments, features of the image, such as edges or corners, may be identified, and images in which the features have an intended position or orientation may be identified for use in subsequent analysis. In some embodiments, machine learning image processing techniques may be used to select images. Techniques other than those discussed above may additionally or alternatively be used in some embodiments.

With specific reference to the use of difference data, where plural obtained images are consecutive frames taken from a video, it is likely that a degree of difference between the successive obtained images and reference image will include peaks and troughs, the troughs representing a good alignment between a subject shroud gap and the reference shroud gap as captured in the respective images and the peaks representing significant misalignment therebetween. If the turbine is being driven at a consistent speed, the peaks and troughs may be expected to show regular and smooth variation. In some examples, image frames which do not conform to smoothly varying peaks and troughs in differences may therefore be removed from the image frames under consideration. These image frames may comprise those in which there was a fluctuation in lighting conditions or an error in data capture, or the like.

For example, images which are associated with a difference value which is above or below the median difference value may be removed from the plural images (video frames) under consideration. In some examples, a median value of the peaks (that is, a maxima in difference values) and a median value of the troughs (that is, a minima in the difference values) of the video frames when considered as a sequence may be determined. This can be used to set rising and falling thresholds for image frame selection wherein:

$$\text{rising difference threshold} = \text{maxima\_fit} - \varepsilon \times \text{abs}(\text{median} - \text{maxima\_fit}),$$

$$\text{falling difference threshold} = \text{minima\_fit} + \varepsilon \times \text{abs}(\text{median} - \text{minima\_fit})$$

where $\varepsilon$ is a factor which determines how close to the maximum/minimum the rising/falling thresholds are set.

In some embodiments, once images have been removed using a thresholding technique, image(s) having a minimum difference value from among the remaining may be selected. In other examples, image (s) taken from the identified troughs in the data may be selected.

In some embodiments a distance transform operator may be used when determining the position of the turbine blade relative to the imaging device in an image being analysed. In particular, where edge detection has been performed (as discussed above), the distance transform operator may be applied to the detected edges, and a lookup table may then be used to determine the relative separation of each edge pixel and the imaging device. In some embodiments all of the relative separation values calculated for edge pixels may be utilised subsequently in the method; alternatively, average values for each edge, or collectively for plural edges in the image, may be calculated and used subsequently. Additionally or alternatively, in some embodiments the orientation of the turbine blade relative to the imaging device may be determined. In some embodiments, the orientation of the turbine blade may be determined by analysing the major axis of the gap between turbine blades and comparing this to the horizon of the imaging device. In other embodiments the relative orientation of the turbine blade may be determined in another way, for example, by analysing the blade shape itself.

Further conditions, in addition to the relative position between the camera and the turbine, may be taken into consideration when selecting an image from a plurality of images to be used subsequently. By way of example the light conditions may be taken into consideration, with images that are too dark or oversaturated excluded from consideration.

In block S508, for a selected image in situations wherein a plurality of images were initially obtained, the determined position of the turbine blade relative to the imaging device is compared with a reference position, as shown in Fig. 5. The position comparison may be performed, for example, by the apparatus 100 under the control of processor 102 following instructions saved on the machine-readable memory 104, all as shown in Figure 1. In some embodiments, particularly where a distance transform operator in conjunction with a lookup table have been used in the determination of relative separations values, the positional suitability of the imaging device position may be determined based on the similarity of the calculated distance for each pixel, or average values for edges or the image as a whole, and corresponding reference distance values for the reference position. Additionally or alternatively, for the selected image if applicable, the orientation angle of the turbine blade relative to the imaging device may be compared with a reference orientation angle.

In block S510 the suitability of the imaging device positioning is determined based on the results of the block S508 comparison. The suitability determination may be performed, for example, by the apparatus 100 under the control of processor 102 following instructions saved on the machine-readable memory 104, all as shown in Figure 1. In some embodiments the suitability of the imaging device position is determined based on the similarity of the imaging device position to a reference position (that is, an imaging device position used to obtain the reference image), with a higher degree of similarity between the imaging device position and reference position being determined to be more suitable. Where the comparison in block S508 consisted of or comprised comparisons between numerical values (such as distances and/or angles), the suitability determination may comprise evaluating the relative similarities of the numerical values against one or more thresholds. By way of example, where a single average distance value is determined and compared to a reference average distance value, the difference between the determined average distance value and reference average distance value may be compared against a distance threshold; if the difference is below the distance threshold, the imaging device may be determined to be suitably positioned, and vice versa. Similar methodology may be used for the angular orientation of the imaging device. A preferred orientation may be dependent on a number of factors, such as the type of component being inspected, type of camera, and so on. In some embodiments a position of the turbine blade that is parallel to the horizon of the imaging device (typically, this would equate to the gap between turbine blades extending orthogonally to the direction between the turbine blades and imaging device) may be favoured in the position suitability determination, this is because orientating the turbine blade and camera in this way may result in even light distribution from imaging device lighting across the face of the turbine blades, hence improved contrast between the turbine blades and lining and better edge detection. In some embodiments normalised values may be used, by way of example, on a percentage scale of 0 to 100 wherein 100 indicates a perfect match to a reference value and 0 indicates a total mismatch.

When the imaging device positional suitability has been determined, in block S512 the suitability is outputted, as shown in Fig. 5. In some embodiments a numerical score for the imaging device positioning may be outputted, based on the similarity of the imaging device position to a reference position. The numerical score may be, for example a percentage similarity score based on normalised values obtained in block S508 (as discussed above), or determined in some other way. The outputting of the suitability may be performed, for example, by the apparatus 100 under the control of processor 102 following instructions saved on the machine-readable memory 104, all as shown in Figure 1. The outputting may be to a display unit, for example display unit 112 as shown in Figure 1, and/or to a speaker unit, computer memory, and so on. In some embodiments the outputting may be to a Graphical User Interface (GUI) that is visible to an operator of the imaging device, allowing rapid repositioning to be performed by the operator. By way of example, the numerical score may be output to a GUI used by an operator in the positioning of the imaging device. In some embodiments in which the outputting of the positional suitability information includes outputting to a display, the display may also include an indicator of the reference position of the turbine blade, by way of example, using dashed outlines or shaded blocks. An indication of the reference position may assist an operator in adjusting the position of the imaging device, if necessary. Use of a GUI and/or indicator of the reference position in this way allows accurate and easily understandable operator feedback to be provided, aiding in the rapid correction of imaging device positioning where necessary.

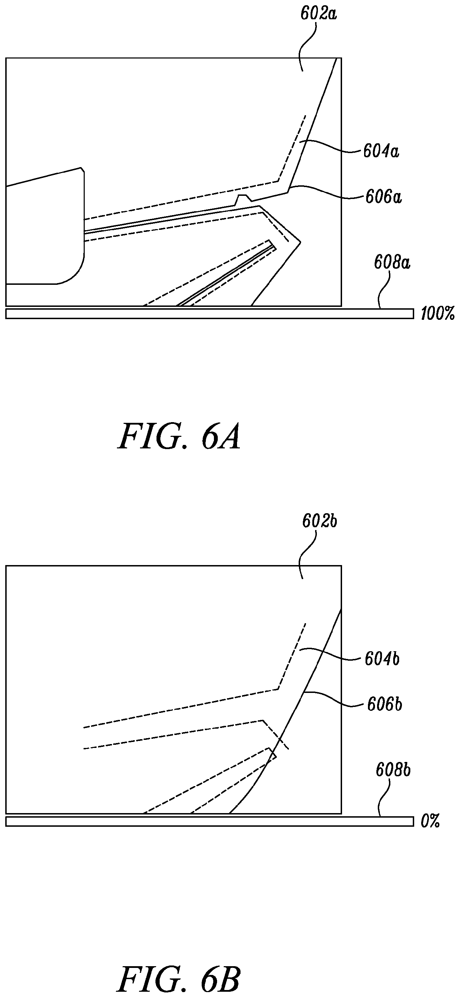

**Fig. 6A** and **Fig. 6B** (collectively Fig. 6) are simplified images showing an example GUI in accordance with some embodiments. In Fig. 6, only the relevant portions of a GUI display are shown. An obtained image 602a, 602b can be seen in Fig. 6A and Fig. 6B. In the Fig. 6 example, an indication 604a, 604b of the reference position can be seen, specifically a series of dashed lines that indicate the position of structural features of the turbine blades in the reference image. The structural features 606a, 606b of the turbine blades in the obtained images are shown in Fig. 6, using solid lines. The GUI in the Fig. 6 example includes a numerical score for the imaging device positioning, based on the similarity of the imaging device position to a reference position; in the Fig. 6 example the numerical score is expressed as a percentage and is displayed using a combination of a progress bar and numerical characters.

In Figure 6A, the similarity between the imaging device position and the reference position is high; as a result the structural features of the turbine blades in the obtained images match well with the indication of the reference position. The high degree of similarity between the imaging device position and the reference position is reflected by the numerical score of 100%, as indicated in Fig. 6A. In contrast to the Fig. 6A situation, Fig. 6B shows a situation in which the similarity between the imaging device position and the reference position is low; as a result the structural features of the turbine blades in the obtained images do not match with the indication of the reference position. The low degree of similarity between the imaging device position and the reference position is reflected by the numerical score of 0%, as indicated in Fig. 6B.

In some embodiments, the outputting of the positional suitability information may comprise outputting instructions for repositioning of the imaging device. In this way, an operator may be provided with guidance on how to improve the positional suitability, improving the efficiency with which the imaging device can be moved to a suitable position. In some embodiments, the instructions for repositioning may include one or more of a rotational movement and a translational movement relative to the turbine blade. An example instruction (which may be displayed to the operator on a screen as part of a GUI, conveyed audibly, and so on) may specify a rotation of 15° clockwise and a translation of 2 cm towards the turbine blade and 1 cm vertically up (that is, away from the centre of the Earth). The instructions may be conveyed as text or as simple characters, for example, using arrows to indicate the direction in which the imaging device should be moved. In some embodiments, the instructions may be combined with the indication of the turbine blade reference position, as discussed above.

Some or all of the method may be repeated until such time as the obtained images are determined to be suitable, that is, the imaging device positional suitability is satisfactory. At this time the images may be sent for evaluation by a human operative or by a machine learning system; the results of this evaluation may then be used to determine a maintenance schedule and/or a subsequent evaluation schedule for the turbine.

By determining and outputting the positional suitability information, the process of positioning the imaging device with sufficient precision to capture useful images may be made simpler, quicker and more efficient according to some embodiments.

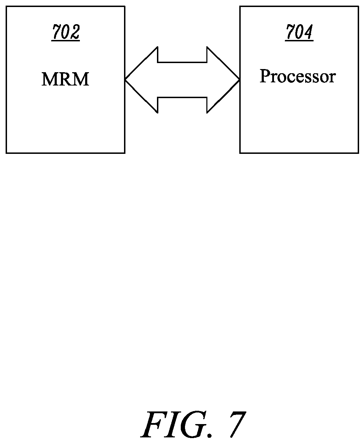

Fig. 7 shows a machine readable medium 702 and a processor 704. The machine readable medium 702 stores instructions which, when executed by a processor cause the processor and/or associated apparatus to carry out any or any combination of the blocks of Fig. 5, or the methods as described herein.

Except where mutually exclusive, any of the features may be employed separately or in combination with any other features and the disclosure extends to and includes all combinations and sub-combinations of one or more features described herein.

## Claims

1. A computer implemented blade monitoring method, comprising:

   obtaining an image of at least a part of a blade;
   analysing the obtained image to detect portions of the image showing a part of a blade;
   determining, using information on the detected portions of the image, the position of the blade relative to an imaging device used to obtain the image of at least a part of the blade;
   comparing the determined position of the blade relative to the imaging device with a reference position;
   determining a positional suitability of the imaging device position, based on the comparison; and
   outputting positional suitability information.

2. The method of claim 1, wherein obtaining the image comprises obtaining a plurality of images.

3. The method of claim 2, wherein analysing the obtained image and determining the position of the turbine blade are repeated for more than one of the plurality of obtained images.

4. The method of claim 3, wherein the determined position of the blade in the more than one images is used to select an image for use in the position comparison and positional suitability determination.

5. The method of claim 3, wherein the comparison between the determined position of the blade relative to the imaging device with the reference position in the more than one images is used to select an image for use in the position comparison and positional suitability determination.

6. The method of any of claims 3 to 5, wherein analysing the obtained image for more than one of the plurality of obtained images further comprises analysing 3D point data quality, and wherein an image having a 3D point data quality that is above a predetermined threshold is selected for use in the position comparison and positional suitability determination.

7. The method of any preceding claim, wherein outputting the positional suitability information comprises outputting a numerical score for the imaging device position based on similarity to the reference position.

8. The method of claim 7, wherein the numerical score is output to a Graphical User Interface, GUI, used by an operator in the positioning of the imaging device.

9. The method of any preceding claim, wherein outputting positional suitability information comprises outputting instructions for repositioning.

10. The method of claim 9, wherein the instructions for repositioning include at least one of a rotational movement relative to the blade and translational movement relative to the blade, to be applied to the imaging device.

11. The method of any preceding claim, wherein the outputting of the positional suitability information comprises outputting the obtained image to a display, wherein the display also comprises an indicator of the reference position.

12. The method of any preceding claim, wherein comparing the determined position of the blade relative to the imaging device with the reference position comprises determining the orientation of the blade relative to the imaging device.

13. The method of claim 12, wherein the positional suitability of the imaging device is determined using the orientation of the blade relative to the imaging device, and wherein a position of the blade that is parallel to the horizon of the imaging device image is favoured in the position suitability determination.

14. An apparatus comprising processor circuitry, the processor circuitry being configured to:

    obtain an image of at least a part of a blade;
    analyse the obtained image to detect portions of the image showing a part of a blade;
    determine, using information on the detected portions of the image, the position of the blade relative to an imaging device used to obtain the image of at least a part of the blade;
    compare the determined position of the blade relative to the imaging device with a reference position;
    determine a positional suitability of the imaging device position, based on the comparison; and
    output positional suitability information.

15. A machine readable medium storing instructions which, when executed by a processor, cause the processor to carry out the method of any of claims 1 to 13.

FIG. 1

FIG. 2

302    310    ← 300

304

308    306

# FIG. 3

408

402a

406

404

402b

# FIG. 4

Obtain image of at least part of blade — S502

Analyse image, detect portions showing part of blade — S504

Determine position of blade relative to imaging device — S506

Compare determined position with reference position — S508

Determine imaging device positional suitability — S510

Output positional suitability information — S512

*FIG. 5*

**FIG. 6A**

**FIG. 6B**

*702*

MRM

*704*

Processor

*FIG. 7*

Europäisches
Patentamt

European
Patent Office

Office européen
des brevets

# EUROPEAN SEARCH REPORT

**Application Number**

EP 24 21 2178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/177721 A1 (MOUTI HICHAM [US] ET AL) 8 June 2023 (2023-06-08)<br>* paragraphs [0016], [0017], [0027], [0055] - [0058], [0064] - [0069], [0116], [0117] *<br>- - - - - | 1-15 | INV.<br>G06V10/24<br>G06V10/44<br>G06T7/70 |
| A | US 2019/338666 A1 (FINN ALAN MATTHEW [US] ET AL) 7 November 2019 (2019-11-07)<br>* paragraphs [0013], [0030] - [0054] *<br>- - - - - | 1-15 | |
| A | US 2011/025844 A1 (HORI FUMIO [JP]) 3 February 2011 (2011-02-03)<br>* paragraphs [0123] - [0139]; figure 6 *<br>- - - - - | 1-15 | |

| TECHNICAL FIELDS SEARCHED (IPC) |
|---|
| G06V<br>G06T |

The present search report has been drawn up for all claims

| Place of search | Date of completion of the search | Examiner |
|---|---|---|
| The Hague | 27 March 2025 | Natanni, Francesco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 2178

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | | Publication date |
|---|---|---|---|---|
| US 2023177721 A1 | 08-06-2023 | US | 2023177721 A1 | 08-06-2023 |
| | | WO | 2023086381 A1 | 19-05-2023 |
| US 2019338666 A1 | 07-11-2019 | NONE | | |
| US 2011025844 A1 | 03-02-2011 | NONE | | |

EPO FORM P0459

For more details about this annex : see Official Journal of the European Patent Office, No. 12/82